(19) Europäisches Patentamt
European Patent Office
Office européen des brevets

(11) EP 3 309 762 A1

(12) EUROPEAN PATENT APPLICATION
published in accordance with Art. 153(4) EPC

(43) Date of publication:
18.04.2018 Bulletin 2018/16

(51) Int Cl.:
$G08B\ 17/00$ (2006.01)

(21) Application number: 16850324.1

(22) Date of filing: 27.09.2016

(86) International application number:
PCT/CN2016/100303

(87) International publication number:
WO 2017/054700 (06.04.2017 Gazette 2017/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 28.09.2015 CN 201510634305

(71) Applicants:
• Dongguan Frontier Technology Institute
Dongguan, Guangdong 523000 (CN)
• Shenzhen Kuang-chi Space Tech. Co. Ltd.
Shenzhen, Guangdong 518000 (CN)

(72) Inventors:
• LIU, Ruopeng
Shenzhen
Guangdong 518057 (CN)
• LUAN, Lin
Shenzhen
Guangdong 518057 (CN)
• ZHOU, Wenlong
Shenzhen
Guangdong 518057 (CN)
• ZHOU, Fei
Shenzhen
Guangdong 518057 (CN)
• YAO, Xiaohui
Shenzhen
Guangdong 518057 (CN)
• WU, Xinghui
Shenzhen
Guangdong 518057 (CN)

(74) Representative: Goddar, Heinz J.
Boehmert & Boehmert
Anwaltspartnerschaft mbB
Pettenkoferstrasse 22
80336 München (DE)

(54) FIRE DISASTER MONITORING METHOD AND APPARATUS

(57) The present disclosure discloses a fire disaster monitoring method and apparatus. The method includes: obtaining an infrared image that is obtained through photoshooting a to-be-monitored area by an infrared detection apparatus located on an aerostat, where different colors displayed in the infrared image correspond to different temperatures; determining, according to the colors displayed in the infrared image, whether a difference between temperatures corresponding to adjacent areas in the infrared image is greater than a predetermined threshold; and if it is determined that the difference between the temperatures corresponding to the adjacent areas is greater than the predetermined threshold, sending fire disaster alarm information to a receiving device, where the fire disaster alarm information is used to indicate that a fire disaster occurs in the to-be-monitored area. The present disclosure resolves a technical problem of relatively low monitoring accuracy caused because a prior-art fire disaster monitoring method is used.

Obtain an infrared image that is obtained through photoshooting a to-be-monitored area by an infrared detection apparatus disposed on an aerostat, where different colors displayed in the infrared image correspond to different temperatures — S102

Determine, according to the colors displayed in the infrared image, whether a difference between temperatures corresponding to adjacent areas in the infrared image is greater than a predetermined threshold — S104

If it is determined that the difference between the temperatures corresponding to the adjacent areas is greater than the predetermined threshold, send fire disaster alarm information to a receiving device, where the fire disaster alarm information is used to indicate that a fire disaster occurs in the to-be-monitored area — S106

FIG. 1

**Description**

TECHNICAL FIELD

The present disclosure relates to the monitoring field, and specifically, to a fire disaster monitoring method and apparatus.

BACKGROUND

A coverage area of a forest is relatively large, causing difficulties in monitoring. Therefore, how to implement real-time observation of forests to avoid forest fire disasters becomes a focal point as well as a difficult point in the monitoring field at present. The following methods are commonly used in the prior art:

1. A manual observation tower is used to monitor a status of a forest in a predetermined area. However, the method using manual monitoring has relatively poor effectiveness and relatively low accuracy. If a forest fire disaster occurs, an accurate address and a fire situation can hardly be learned by using this manual observation method.
2. Satellite remote sensing is used to monitor a forest status. By using this method, monitoring is not affected by a smoke screen, and a relatively high visibility can be obtained. However, a satellite orbits the Earth in a predetermined path, and therefore cannot implement continuous monitoring of a forest status in a predetermined area. Furthermore, a resolution is relatively low.

That is, due to the constraint of various objective factors, by using the fire disaster monitoring methods currently used in the prior art, a monitoring status of a predetermined area cannot be obtained in real time, so that a fire disaster cannot be discovered in time; moreover, accuracy in fire disaster monitoring is also relatively low, and as a result, an address of a fire disaster cannot be accurately located, so that a fire situation cannot be taken under control in time. This may further result in irremediable losses.

No effective solutions have been proposed to address the foregoing issues.

SUMMARY

Embodiments of the present disclosure provide a fire disaster monitoring method and apparatus, to resolve the technical issue of relatively low monitoring accuracy caused because a prior-art fire disaster monitoring method is used.

According to an aspect of the embodiments of the present disclosure, a fire disaster monitoring method is provided, including: obtaining an infrared image that is obtained through photoshooting a to-be-monitored area by an infrared detection apparatus located on an aerostat, where different colors displayed in the infrared image correspond to different temperatures; determining, according to the colors displayed in the infrared image, whether a difference between temperatures corresponding to adjacent areas in the infrared image is greater than a predetermined threshold; and if it is determined that the difference between the temperatures corresponding to the adjacent areas is greater than the predetermined threshold, sending fire disaster alarm information to a receiving device, where the fire disaster alarm information is used to indicate that a fire disaster occurs in the to-be-monitored area.

Optionally, before the obtaining an infrared image that is obtained through photoshooting a to-be-monitored area by an infrared detection apparatus located on an aerostat, the method further includes: obtaining a monitoring parameter, where the monitoring parameter includes at least a parameter used to indicate the to-be-monitored area; and driving the infrared detection apparatus to a location and an angle corresponding to the to-be-monitored area, where the location and the angle are used to enable a viewfinding picture of the infrared detection apparatus during the photoshooting to include the to-be-monitored area.

Optionally, the monitoring parameter includes at least a monitoring time period and a monitoring interval for the to-be-monitored area; and the obtaining an infrared image that is obtained through photoshooting a to-be-monitored area by an infrared detection apparatus located on an aerostat includes: obtaining, in the monitoring time period, the infrared image that is obtained through photoshooting the to-be-monitored area by the infrared detection apparatus at the predetermined monitoring interval.

Optionally, when sending the fire disaster alarm information to the receiving device, the method further includes: sending, to the receiving device, location information used to indicate a location of the to-be-monitored area.

Optionally, after it is determined that the difference between the temperatures corresponding to the adjacent areas is greater than the predetermined threshold and before the sending, to the receiving device, location information used to indicate a location of the to-be-monitored area, the method further includes: obtaining a current location and a current angle of the infrared detection apparatus; and obtaining, according to the current location and the current angle of the infrared detection apparatus, the location information used to indicate the location of the to-be-monitored area.

Optionally, the infrared detection apparatus is an infrared detection camera.

According to another aspect of the embodiments of the present disclosure, a fire disaster monitoring apparatus is further provided, including: a first obtaining unit, configured to obtain an infrared image that is obtained through photoshooting a to-be-monitored area by an infrared detection apparatus located on an aerostat, where different colors displayed in the infrared image correspond to different temperatures; a determining unit, configured to determine, according to the colors displayed in the infrared image, whether a difference between temperatures corresponding to adjacent areas in the infrared image is greater than a predetermined threshold; and a first sending unit, configured to: if it is determined that the difference between the temperatures corresponding to the adjacent areas is greater than the predetermined threshold, send fire disaster alarm information to a receiving device, where the fire disaster alarm information is used to indicate that a fire disaster occurs in the to-be-monitored area.

Optionally, the apparatus further includes a second obtaining unit, configured to obtain a monitoring parameter before the infrared image that is obtained through photoshooting the to-be-monitored area by the infrared detection apparatus located on the aerostat, where the monitoring parameter includes at least a parameter used to indicate the to-be-monitored area; and a driving unit, configured to drive the infrared detection apparatus to a location and an angle corresponding to the to-be-monitored area, where the location and the angle are used to enable a viewfinding picture of the infrared detection apparatus during the photoshooting to include the to-be-monitored area.

Optionally, the monitoring parameter includes at least a monitoring time period and a monitoring interval for the to-be-monitored area; and the first obtaining unit includes an obtaining module, configured to obtain, in the monitoring time period, the infrared image that is obtained through photoshooting the to-be-monitored area by the infrared detection apparatus at the predetermined monitoring interval.

Optionally, the first sending unit is configured to: when sending the disaster alarm information to the receiving device, send, to the receiving device, location information used to indicate a location of the to-be-monitored area.

Optionally, the apparatus further includes: a third obtaining unit, configured to: after it is determined that the difference between the temperatures corresponding to the adjacent areas is greater than the predetermined threshold and before the location information used to indicate the location of the to-be-monitored area is sent to the receiving device, obtain a current location and a current angle of the infrared detection apparatus; and a fourth obtaining unit, configured to obtain, according to the current location and the current angle of the infrared detection apparatus, the location information used to indicate the location of the to-be-monitored area.

Optionally, the infrared detection apparatus is an infrared detection camera, or another component that can convert an incident infrared radiation signal into an electrical signal for output.

In the embodiments of the present disclosure, an aerostat is arranged over a to-be-monitored area. An infrared image that is obtained through photoshooting the to-be-monitored area by an infrared detection apparatus on the aerostat is obtained, where different colors displayed in the infrared image correspond to different temperatures. Further, whether a difference between temperatures corresponding to adjacent areas in the infrared image is greater than a predetermined threshold is determined according to the colors displayed in the infrared image; and when it is determined that the difference between the temperatures corresponding to the adjacent areas is greater than the predetermined threshold, fire disaster alarm information is sent to a receiving device, where the alarm information is used to indicate that a fire disaster occurs in the to-be-monitored area. By using the infrared detection apparatus on the aerostat to monitor the to-be-monitored area, whether a fire disaster occurs in the monitored area can be determined in real time, so that a monitoring process is no longer restricted by a monitoring distance. Furthermore, colors in the infrared image change promptly and accurately. Therefore, temperatures corresponding to the colors are used to determine whether a fire disaster occurs, further ensuring the accuracy of fire disaster monitoring. This overcomes the prior-art issue of relatively low monitoring accuracy caused because a monitoring distance is relatively long.

BRIEF DESCRIPTION OF DRAWINGS

The accompanying drawings described herein further illustrate the present disclosure, and constitute a part of this application. The illustrative embodiments of the present disclosure and corresponding descriptions herein are only used for the purpose of explanation, and are not intended to limit the present disclosure. Among the accompanying drawings:

FIG. 1 is a flowchart of an optional fire disaster monitoring method according to an embodiment of the present disclosure;
FIG. 2 is a schematic diagram of a to-be-monitored area in an optional fire disaster monitoring method according to an embodiment of the present disclosure;
FIG. 3(a) is a schematic diagram of an optional obtaining of a location of a fire disaster according to an embodiment of the present disclosure;
FIG. 3(b) is a schematic diagram of another optional obtaining of a location of a fire disaster according to an embodiment of the present disclosure; and
FIG. 4 is a schematic diagram of an optional fire disaster monitoring apparatus according to an embodiment of the present disclosure.

DESCRIPTION OF EMBODIMENTS

To help a person skilled in the art better understand the solutions of the present disclosure, the following clearly and completely describes the technical solutions in the embodiments of the present disclosure with reference to the accompanying drawings in the embodiments of the present disclosure. Apparently, the described embodiments are merely some but not all of the embodiments of the present disclosure. All other embodiments obtained by a person of ordinary skill in the art based on the embodiments of the present disclosure without creative efforts shall fall within the protection scope of the present disclosure.

It should be noted that, in the specification, claims, and accompanying drawings of the present disclosure, the terms "first", "second", and so on are intended to distinguish between similar objects but do not necessarily indicate a specific order or sequence. It should be understood that the data termed in such a way are interchangeable in proper circumstances so that the embodiments of the present disclosure described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those steps or units, but may include other steps or units not expressly listed or inherent to such a process, method, system, product, or device.

Embodiment 1

According to this embodiment of the present disclosure, an embodiment of a fire disaster monitoring method is provided. It should be noted that the steps illustrated in the accompanying flowchart may be executed in a computer system such as a group of computer-executable instructions. Although the flowchart illustrates a logical sequence, the illustrated or described steps may be executed in a sequence other than the sequence illustrated herein.

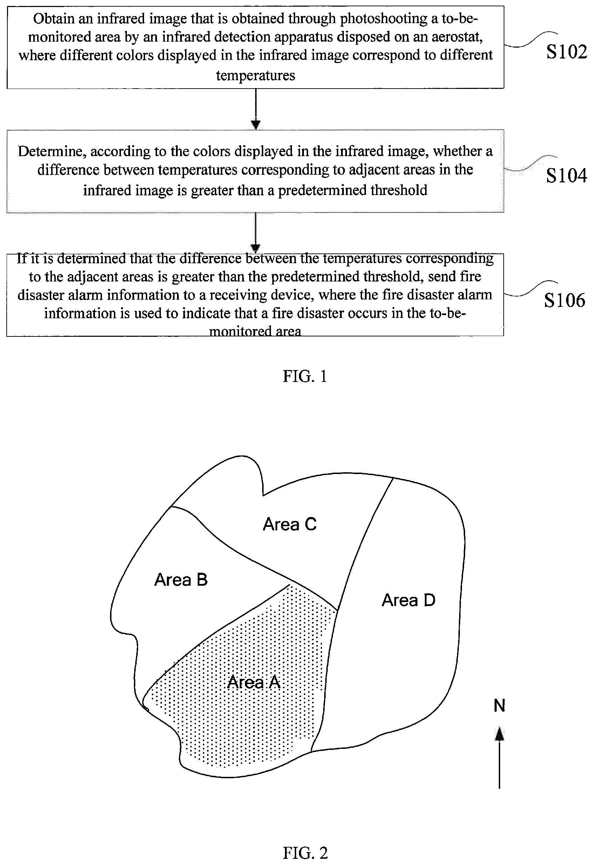

In this embodiment of the present disclosure, FIG. 1 provides an embodiment of a fire disaster monitoring method. As shown in FIG. 1, the method includes the following steps:

S102. Obtain an infrared image that is obtained through photoshooting a to-be-monitored area by an infrared detection apparatus located on an aerostat, where different colors displayed in the infrared image correspond to different temperatures.

S104. Determine, according to the colors displayed in the infrared image, whether a difference between temperatures corresponding to adjacent areas in the infrared image is greater than a predetermined threshold.

S106. If it is determined that the difference between the temperatures corresponding to the adjacent areas is greater than the predetermined threshold, send fire disaster alarm information to a receiving device, where the fire disaster alarm information is used to indicate that a fire disaster occurs in the to-be-monitored area.

Optionally, in this embodiment, the fire disaster monitoring method may be applied but without being limited to a forest fire disaster monitoring process. An aerostat is arranged over a monitored forest area. An infrared image that is obtained through photoshooting the to-be-monitored area by an infrared detection apparatus on the aerostat is obtained, and different colors displayed in the infrared image correspond to different temperatures. Further, whether a difference between temperatures corresponding to adjacent areas in the infrared image is greater than a predetermined threshold is determined according to the colors displayed in the infrared image; and when it is determined that the difference between the temperatures corresponding to the adjacent areas is greater than the predetermined threshold, fire disaster alarm information is sent to a receiving device, where the fire disaster alarm information is used to indicate that a fire disaster occurs in the to-be-monitored area. Optionally, in this embodiment, the aerostat may include but is not limited to one of the following: a helium airship, a balloon, or an unmanned aerial vehicle. One or more aerostats may be arranged over the to-be-monitored area. The foregoing is merely an example, and this embodiment sets no limitation thereto.

It should be noted that, in the prior art, a monitoring result is affected by factors such as a monitoring distance and a resolution of a monitoring image, so that a fire disaster monitoring result cannot be accurately obtained from a monitoring device, and moreover, a fire situation in a fire disaster area cannot be accurately controlled in time. To improve accuracy of fire disaster monitoring and avoid damages caused by fire disasters, in this embodiment, the fire disaster monitoring method is provided. The infrared image is obtained through photoshooting the to-be-monitored area by the infrared detection apparatus on the aerostat arranged over the to-be-monitored area, whether a fire occurs in the to-be-monitored area is determined according to the temperatures corresponding to the colors in the infrared image, and then the corresponding fire disaster alarm information is sent.

Specifically, a temperature of an area in which a fire disaster occurs is greatly increased compared to a temperature of an adjacent area. Therefore, whether a fire disaster occurs in the monitored area is determined by determining whether the difference between the temperatures corresponding to the colors of the adjacent areas is greater than the predetermined threshold. For example, as shown in FIG. 2, a color of an area A is darker (as shown in the shaded area in the figure) than a color of an adjacent area (such as an area B to an area D shown in FIG. 2). A temperature a corresponding to the area A is compared with a temperature of the adjacent area. For example, temperatures corresponding to the area B to the area D are respectively a temperature b, a temperature c, and a temperature d. It is learned through comparison that differences between the temperature a corresponding to the area A and the temperatures corresponding to the adjacent areas (such as the area B to the area D shown in FIG. 2) are all greater than the predetermined threshold. Therefore, it may be determined that a fire disaster occurs in the area A. The foregoing is merely an example, and this embodiment sets no limitation thereto.

Optionally, in this embodiment, before the infrared image that is obtained through photoshooting the to-be-monitored area by the infrared detection apparatus located on the aerostat is obtained, the foregoing method may further include but is not limited to: driving, according to an obtained monitoring parameter of the to-be-monitored area, the infrared detection apparatus to a location and an angle corresponding to the to-be-monitored area. That is, the infrared detection apparatus may adjust a location and an angle of the infrared detection apparatus according to a monitoring parameter of the to-be-monitored area, such as location information of the to-be-monitored area, obtained in real time. In this way, the infrared detection apparatus adjusts the location and the angle, to face toward the to-be-monitored area, thereby implementing accurate monitoring of the to-be-monitored area.

Optionally, in this embodiment, the infrared detection apparatus is an infrared detection camera. A camera of the infrared detection camera can rotate, so as to enlarge a monitoring range of the infrared detection apparatus on the aerostat that is arranged at a predetermined location. For example, the camera of the infrared detection camera may implement 360° omnidirectional rotation on a horizontal plane, to enlarge the covered monitoring range, so that viewfinding pictures of different directions and different locations in the to-be-monitored area can be monitored and obtained.

Optionally, in this embodiment, the monitoring parameter may include but is not limited to a parameter used to indicate the to-be-monitored area, and a monitoring time period and a monitoring interval for the to-be-monitored area. That is, in this embodiment, when the infrared detection apparatus on the aerostat is used to monitor the to-be-monitored area, not only the infrared detection apparatus can be driven, according to the parameter used to indicate the to-be-monitored area (such as the location information of the to-be-monitored area), to the location and the angle corresponding to the to-be-monitored area, and also a mode of monitoring the to-be-monitored area may be controlled. For example, different monitoring time periods correspond to different monitoring intervals. The infrared detection apparatus takes an infrared image of the to-be-monitored area at the predetermined monitoring interval in the monitoring time period.

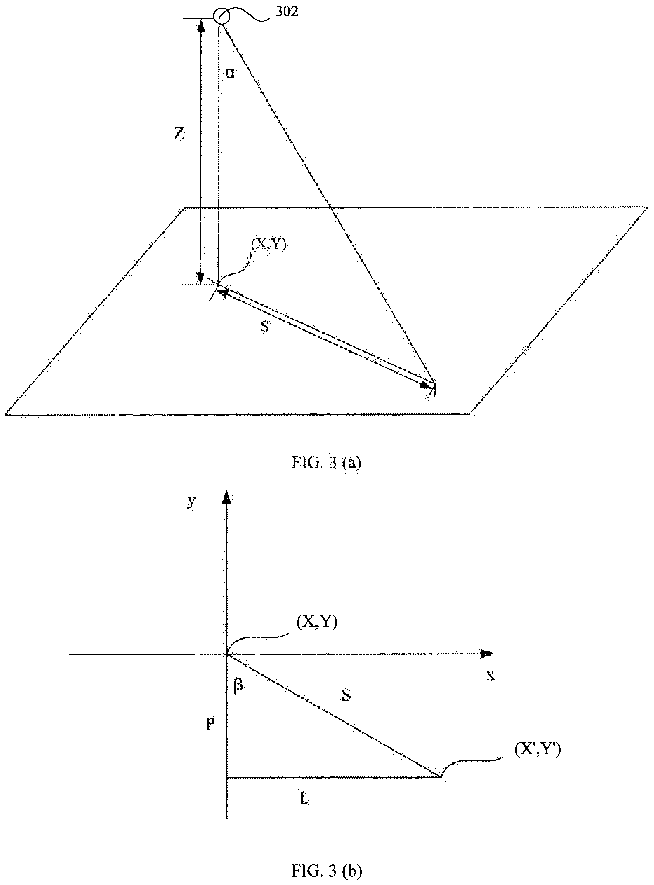

Optionally, in this embodiment, after the area in which a fire disaster occurs is determined, the method further includes: obtaining a current location and a current angle of the infrared detection apparatus on the aerostat, and calculating an address of the fire disaster area, so that the fire disaster alarm information can be accurately sent in time. The current location of the infrared detection apparatus may include but is not limited to a current location of the aerostat. Further, current latitude and longitude (for example, latitude and longitude shown in FIG. 3(a) are respectively X and Y) of the aerostat (such as an aerostat 302 shown in FIG. 3) may be obtained by using a GPS; and current altitude (for example, altitude shown in FIG. 3(a) is Z) of the aerostat (such as the aerostat 302 shown in FIG. 3) may be obtained by using an altimeter. The current location of the infrared detection apparatus on the aerostat may be obtained by using the current location of the aerostat. The current angle of the infrared detection apparatus may further be obtained. The current angle of the infrared detection apparatus may include but is not limited to a rotation angle and a pitch angle. An actual area (for example, a location of the fire disaster) currently detected by the infrared detection apparatus may be calculated. The pitch angle may be but is not limited to an included angle between a line stretcher of a probe of the infrared detection apparatus and a vertical line perpendicular to the ground. The rotation angle may be but is not limited to a rotation angle of the line stretcher of the probe of the infrared detection apparatus relative to the latitude and the longitude. For example, a pitch angle shown in FIG. 3 (a) is $\alpha$, and a rotation angle shown in FIG. 3(b) is a rotation angle $\beta$ relative to the longitude.

In this embodiment provided in this application, an aerostat is arranged over the to-be-monitored area. An infrared image that is obtained through photoshooting the to-be-monitored area by an infrared detection apparatus on the aerostat is obtained, where different colors displayed in the infrared image correspond to different temperatures. Further, whether a difference between temperatures corresponding to adjacent areas in the infrared image is greater than a predetermined threshold is determined according to the colors displayed in the infrared image; and when it is determined that the difference between the temperatures corresponding to the adjacent areas is greater than the predetermined threshold, fire disaster alarm information is sent to a receiving device, where the alarm information is used to indicate that a fire disaster occurs in the to-be-monitored area. By using the infrared detection apparatus on the aerostat to monitor the to-be-monitored area, whether a fire disaster occurs in the monitored area can be determined in real time, so that a monitoring process is no longer restricted by a monitoring distance. Furthermore, colors in the infrared image change promptly and accurately. Therefore, temperatures corresponding to the colors are used to determine whether a fire disaster occurs, further ensuring the accuracy of fire disaster monitoring. This overcomes the prior-art issue of relatively low monitoring accuracy caused because a monitoring distance is relatively long.

As an optional solution, before the infrared image that is obtained through photoshooting the to-be-monitored area by the infrared detection apparatus located on the aerostat is obtained, the method further includes the following steps:

S1. Obtain a monitoring parameter, where the monitoring parameter includes at least a parameter used to indicate the to-be-monitored area.

S2. Drive the infrared detection apparatus to a location and an angle corresponding to the to-be-monitored area, where the location and the angle are used to enable a viewfinding picture of the infrared detection apparatus during the photoshooting to include the to-be-monitored area.

Optionally, in this embodiment, the parameter used to indicate the to-be-monitored area in the monitoring parameter may include but is not limited to location information of the to-be-monitored area. Further, the infrared monitoring apparatus is driven according to the obtained monitoring parameter to adjust a location and an angle, so that the infrared monitoring apparatus aims at the to-be-monitored area, thereby obtaining monitoring picture information of the to-be-monitored area.

Details are described with reference to the following example. As shown in FIG. 2, it is assumed that the aerostat is located right above the area A, and that the infrared detection apparatus (for example, an infrared detection camera) on the aerostat faces right toward the area A right below. When a monitoring parameter obtained at a current moment indicates that a to-be-monitored area is the area B, in this example, the infrared detection camera may be driven to a location and an angle, so that the infrared detection camera faces the area B in the northwest direction. In this way, a viewfinding picture of the infrared detection camera in photoshooting includes the to-be-monitored area B.

It should be noted that, in this embodiment, the infrared detection apparatus being driven, according to different to-be-monitored areas, to change may be but is not limited to adjustment according to different application scenarios. This embodiment sets no limitation thereto.

In this embodiment, after the monitoring parameter used to indicate the to-be-monitored area is obtained, the infrared detection apparatus is driven to the location and the angle corresponding to the to-be-monitored area, so that the viewfinding picture of the infrared detection apparatus in photoshooting includes the to-be-monitored area, thereby implementing timely adjustment of a monitoring range of the infrared detection apparatus according to different to-be-monitored areas. This achieves the purpose of accurately obtaining a monitoring result and avoids irremediable losses caused because a fire disaster cannot be accurately monitored.

In an optional solution, the monitoring parameter includes at least a monitoring time period and a monitoring interval for the to-be-monitored area, and the obtaining an infrared image obtained through photoshooting a to-be-monitored area by an infrared detection apparatus located on an aerostat includes:

S1: obtaining, in the monitoring time period, the infrared image obtained through photoshooting the to-be-monitored area by the infrared detection apparatus at the predetermined monitoring interval.

Optionally, in this embodiment, different monitoring modes may further be selected for different to-be-monitored areas, that is, infrared images are taken at different monitoring intervals in different monitoring time periods.

Details are described with reference to the following example. As shown in FIG. 2, a monitoring range covered by the infrared detection apparatus (that is, the infrared detection camera) on the aerostat is the area A to the area D. In this example, it is assumed that the infrared detection camera is driven to face toward the area B during 8:00 to 10:00, and a monitoring interval is 10 minutes. That is, the infrared detection camera takes an infrared image of the area B every 10 minutes during 8:00 to 10:00, to monitor whether a fire disaster occurs in the area B. In addition, the infrared detection camera is driven to face toward the area A during 10:00 to 12:00. The area A is an area in which fire disasters occur frequently. Therefore, the monitoring interval is 5 minutes. That is, the infrared detection camera takes an infrared image of the area A every 5 minutes during 10:00 to 12:00, to monitor whether a fire disaster occurs in the monitoring area A. A monitoring manner in another area is similar. Details are not described herein in this embodiment.

In this embodiment provided in this application, according to the obtained monitoring parameter, for different to-be-monitored areas, infrared images obtained through photoshooting the to-be-monitored areas by the infrared detection apparatus at predetermined monitoring intervals are obtained at corresponding monitoring time periods, implementing flexible monitoring of the to-be-monitored areas by using the infrared detection apparatus on the aerostat. Further, not only real-time monitoring is ensured by flexibly adjusting the monitoring time periods and the monitoring interval, to implement fire disaster discovery in time; but also, monitoring accuracy is further ensured by flexibly adjusting the monitoring time periods and the monitoring interval.

In an optional solution, when the fire disaster alarm information is sent to the receiving device, the method further includes:

S1. sending, to the receiving device, location information used to indicate the to-be-monitored area.

Optionally, in this embodiment, the receiving device may include but is not limited to a terminal, such as a mobile phone, a tablet computer, or a notebook computer. Real-time and accurate monitoring is further ensured by sending the alarm information to a terminal easy to be carried by monitoring personnel.

In an optional solution, after it is determined that the difference between the temperatures corresponding to the adjacent areas is greater the predetermined threshold and before the location information used to indicate the location of the to-be-monitored area is sent to the receiving device, the method further includes:

> S1. obtaining a current location and a current angle of the infrared detection apparatus; and
> S2. obtaining, according to the current location and the current angle of the infrared detection apparatus, the location information used to indicate the location of the to-be-monitored area.

Details are described with reference to the following example. FIG. 3(a) and FIG. 3(b) are schematic diagrams of obtaining a location of a fire disaster. A current location of the infrared detection apparatus is (X,Y, Z), where X, Y, and Z are respectively used to represent current longitude, latitude, and altitude. A current pitch angle (as shown in the figure) is $\alpha$, and a current rotation angle (relative to the longitude in the figure) is $\beta$. Further, a location (X',Y') of an actually detected fire disaster may be obtained through the following calculation:

$$S=Z*\tan\alpha \quad (1)$$

$$L=S*\sin\beta \quad (2)$$

$$P=S*\cos\beta \quad (3)$$

$$X'=X+L \quad (4)$$

$$Y'=Y+P \quad (5)$$

The foregoing calculation process is merely an example. A location of a fire disaster may further be obtained by using another manner, and this embodiment sets no limitation thereto.

In this embodiment provided in this embodiment, the location information used to indicate the location of the to-be-monitored area is accurately obtained according to the current location and the current angle of the infrared detection apparatus.

Embodiment 2

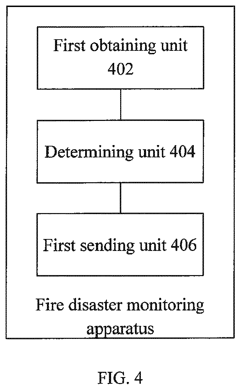

According to this embodiment of the present disclosure, an embodiment of a fire disaster monitoring apparatus is provided. As shown in FIG. 4, the apparatus includes:

> (1) a first obtaining unit 402, configured to obtain an infrared image that is obtained through photoshooting a to-be-monitored area by an infrared detection apparatus located on an aerostat, where different colors displayed in the infrared image correspond to different temperatures;
> (2) a determining unit 404, configured to determine, according to the colors displayed in the infrared image, whether a difference between temperatures corresponding to adjacent areas in the infrared image is greater than a predetermined threshold; and
> (3) a first sending unit 406, configured to: if it is determined that the difference between the temperatures corresponding to the adjacent areas is greater than the predetermined threshold, send fire disaster alarm information to a receiving device, where the fire disaster alarm information is used to indicate that a fire disaster occurs in the to-be-monitored area.

Optionally, in this embodiment, the fire disaster monitoring apparatus may be applied but without being limited to a forest fire disaster monitoring process. An aerostat is arranged over a monitored forest area. An infrared image that is obtained through photoshooting the to-be-monitored area by an infrared detection apparatus on the aerostat is obtained, where different colors displayed in the infrared image correspond to different temperatures. Further, whether a difference between temperatures corresponding to adjacent areas in the infrared image is greater than a predetermined threshold is determined according to the colors displayed in the infrared image; and when it is determined that the difference between the temperatures corresponding to the adjacent areas is greater than the predetermined threshold, fire disaster alarm information is sent to a receiving device, where the fire disaster alarm information is used to indicate that a fire disaster occurs in the to-be-monitored area. Optionally, in this embodiment, the aerostat may include but is not limited to one of the following: a helium airship, a balloon, or an unmanned aerial vehicle. One or more aerostats may be arranged over the to-be-monitored area. The foregoing is merely an example, and this embodiment sets no limitation thereto.

It should be noted that, in the prior art, a monitoring result is affected by factors such as a monitoring distance and a resolution of a monitoring image, so that a fire disaster monitoring result cannot be accurately obtained from a monitoring device, and moreover, a fire situation in a fire disaster area cannot be accurately controlled in time. To improve accuracy of fire disaster monitoring and avoid damages caused by fire disasters, in this embodiment, the fire disaster monitoring apparatus is provided. The infrared image is obtained through photoshooting the to-be-monitored area by the infrared detection apparatus on the aerostat arranged over the to-be-monitored area, whether a fire occurs in the to-be-monitored area is determined according to the temperatures corresponding to the colors in the infrared image, and then the corresponding fire disaster alarm information is sent.

Specifically, a temperature of an area in which a fire disaster occurs is greatly increased compared to a temperature of an adjacent area. Therefore, whether a fire disaster occurs in the monitored area is determined by determining whether the difference between the temperatures corresponding to the colors of the adjacent areas is greater than the predetermined threshold. For example, as shown in FIG. 2, a color of an area A is darker (as shown in the shaded area in the figure) than a color of an adjacent area (such as an area B to an area D shown in FIG. 2). A temperature a corresponding to the area A is compared with a temperature of the adjacent area. For example, temperatures corresponding to the area B to the area D are respectively a temperature b, a temperature c, and a temperature d. It is learned through comparison that differences between the temperature a corresponding to the area A and the temperatures corresponding to the adjacent areas (such as the area B to the area D shown in FIG. 2) are all greater than the predetermined threshold. Therefore, it may be determined that a fire disaster occurs in the area A. The foregoing is merely an example, and this embodiment sets no limitation thereto.

Optionally, in this embodiment, the foregoing apparatus may further include but is not limited to: a driving unit, configured to drive, according to an obtained monitoring parameter of the to-be-monitored area, the infrared detection apparatus to a location and an angle corresponding to the to-be-monitored area. That is, the infrared detection apparatus may adjust a location and an angle of the infrared detection apparatus according to a monitoring parameter of the to-be-monitored area, such as location information of the to-be-monitored area, obtained in real time. In this way, the infrared detection apparatus adjusts the location and the angle, to face toward the to-be-monitored area, thereby implementing accurate monitoring of the to-be-monitored area.

Optionally, in this embodiment, the infrared detection apparatus is an infrared detection camera. A camera of the infrared detection camera can rotate, so as to enlarge a monitoring range of the infrared detection apparatus on the aerostat that is arranged at a predetermined location. For example, the camera of the infrared detection camera may implement 360° omnidirectional rotation on a horizontal plane, to enlarge the covered monitoring range, so that viewfinding pictures of different directions and different locations in the to-be-monitored area can be monitored and obtained.

Optionally, in this embodiment, the monitoring parameter may include but is not limited to a parameter used to indicate the to-be-monitored area, and a monitoring time period and a monitoring interval for the to-be-monitored area. That is, in this embodiment, when the infrared detection apparatus on the aerostat is used to monitor the to-be-monitored area, not only the infrared detection apparatus can be driven, according to the parameter used to indicate the to-be-monitored area (such as the location information of the to-be-monitored area), to the location and the angle corresponding to the to-be-monitored area, and also a mode of monitoring the to-be-monitored area may be controlled. For example, different monitoring time periods correspond to different monitoring intervals. The infrared detection apparatus takes an infrared image of the to-be-monitored area at the predetermined monitoring interval in the monitoring time period.

Optionally, in this embodiment, after the area in which a fire disaster occurs is determined, a current location and a current angle of the infrared detection apparatus on the aerostat is obtained, thereby calculating an address of the fire disaster area, so that the fire disaster alarm information can be accurately sent in time. The current location of the infrared detection apparatus may include but is not limited to a current location of the aerostat. Further, current latitude and longitude(for example, latitude and longitude shown in FIG. 3(a) are respectively X and Y) of the aerostat (such as an aerostat 302 shown in FIG. 3) may be obtained by using a GPS; and current altitude (for example, altitude shown in FIG. 3(a) is Z) of the aerostat (such as the aerostat 302 shown in FIG. 3) may be obtained by using an altimeter. The current location of the infrared detection apparatus on the aerostat may be obtained by using the current location of the aerostat. The current angle of the infrared detection apparatus may further be obtained. The current angle of the infrared detection apparatus may include but is not limited to a rotation angle and a pitch angle. An actual area (for example, a location of the fire disaster) currently detected by the infrared detection apparatus may be calculated. The pitch angle may be but is not limited to an included angle between a line stretcher of a probe of the infrared detection apparatus and a vertical line perpendicular to the ground. The rotation angle may be but is not limited to a rotation angle of the line stretcher of the probe of the infrared detection apparatus relative to the latitude and the longitude. For example, a pitch angle shown in FIG. 3 (a) is $\alpha$, and a rotation angle shown in FIG. 3(b) is a rotation angle $\beta$ relative to the longitude.

In this embodiment provided in this application, an aerostat is arranged over the to-be-monitored area. An infrared image that is obtained through photoshooting the to-be-monitored area by an infrared detection apparatus on the aerostat is obtained, where different colors displayed in the infrared image correspond to different temperatures. Further, whether a difference between temperatures corresponding to adjacent areas in the infrared image is greater than a predetermined threshold is determined according to the colors displayed in the infrared image; and when it is determined that the difference between the temperatures corresponding to the adjacent areas is greater than the predetermined threshold, fire disaster alarm information is sent to a receiving device, where the alarm information is used to indicate that a fire disaster occurs in the to-be-monitored area. By using the infrared detection apparatus on the aerostat to monitor the to-be-monitored area, whether a fire disaster occurs in the monitored area can be determined in real time, so that a monitoring process is no longer restricted by a monitoring distance. Furthermore, colors in the infrared image change promptly and accurately. Therefore, temperatures corresponding to the colors are used to determine whether a fire disaster occurs, further ensuring the accuracy of fire disaster monitoring. This overcomes the prior-art issue of relatively low monitoring accuracy caused because a monitoring distance is relatively long.

In an optional solution, the apparatus further includes:

    (1) a second obtaining unit, configured to obtain a monitoring parameter before the infrared image that is obtained through photoshooting the to-be-monitored area by the infrared detection apparatus located on the aerostat is obtained, where the monitoring parameter includes at least a parameter used to indicate the to-be-monitored area; and
    (2) a driving unit, configured to drive the infrared detection apparatus to a location and an angle corresponding to the to-be-monitored area, where the location and the angle are used to enable a viewfinding picture of the infrared detection apparatus during the photoshooting to include the to-be-monitored area.

Optionally, in this embodiment, the parameter used to indicate the to-be-monitored area in the monitoring parameter may include but is not limited to location information of the to-be-monitored area. Further, the infrared monitoring apparatus is driven according to the obtained monitoring parameter to adjust a location and an angle, so that the infrared monitoring apparatus aims at the to-be-monitored area, thereby obtaining monitoring picture information of the to-be-monitored area.

Details are described with reference to the following example. As shown in FIG. 2, it is assumed that the aerostat is located right above the area A, and that the infrared detection apparatus (for example, an infrared detection camera) on the aerostat faces right toward the area A right below. When a monitoring parameter obtained at a current moment indicates that a to-be-monitored area is the area B, in this example, the infrared detection camera may be driven to a location and an angle, so that the infrared detection camera faces the area B in the northwest direction. In this way, a viewfinding picture of the infrared detection camera in photoshooting includes the to-be-monitored area B.

It should be noted that, in this embodiment, the infrared detection apparatus being driven, according to different to-be-monitored areas, to change may be but is not limited to adjustment according to different application scenarios. This embodiment sets no limitation thereto.

In this embodiment, after the monitoring parameter used to indicate the to-be-monitored area is obtained, the infrared detection apparatus is driven to the location and the angle corresponding to the to-be-monitored area, so that the viewfinding picture of the infrared detection apparatus in photoshooting includes the to-be-monitored area, thereby implementing timely adjustment of a monitoring range of the infrared detection apparatus according to different to-be-monitored areas. This achieves the purpose of accurately obtaining a monitoring result and avoids irremediable losses caused because a fire disaster cannot be accurately monitored.

In an optional solution, the monitoring parameter includes at least a monitoring time period and a monitoring interval for the to-be-monitored area; and the first obtaining unit includes:

    (1) an obtaining unit, configured to obtain, in the monitoring time period, the infrared image obtained through photoshooting the to-be-monitored area by the infrared detection apparatus at the predetermined monitoring interval.

Optionally, in this embodiment, different monitoring modes may further be selected for different to-be-monitored areas, that is, infrared images are taken at different monitoring intervals in different monitoring time periods.

Details are described with reference to the following example. As shown in FIG. 2, a monitoring range covered by the infrared detection apparatus (that is, the infrared detection camera) on the aerostat is the area A to the area D. In this example, it is assumed that the infrared detection camera is driven to face toward the area B during 8:00 to 10:00, and a monitoring interval is 10 minutes. That is, the infrared detection camera takes an infrared image of the area B every 10 minutes during 8:00 to 10:00, to monitor whether a fire disaster occurs in the area B. In addition, the infrared detection camera is driven to face toward the area A during 10:00 to 12:00. The area A is an area in which fire disasters occur frequently. Therefore, the monitoring interval is 5 minutes. That is, the infrared detection camera takes an infrared image of the area A every 5 minutes during 10:00 to 12:00, to monitor whether a fire disaster occurs in the monitoring area A. A monitoring manner in another area is similar. Details are not described herein in this embodiment.

In this embodiment provided in this application, according to the obtained monitoring parameter, for different to-be-monitored areas, infrared images obtained through photoshooting the to-be-monitored areas by the infrared detection apparatus at predetermined monitoring intervals are obtained at corresponding monitoring time periods, implementing flexible monitoring of the to-be-monitored areas by using the infrared detection apparatus on the aerostat. Further, not only real-time monitoring is ensured by flexibly adjusting the monitoring time periods and the monitoring interval, to implement fire disaster discovery in time; but also, monitoring accuracy is further ensured by flexibly adjusting the monitoring time periods and the monitoring interval.

In an optional solution:

(1) the first sending unit is configured to: when sending the disaster alarm information to the receiving device, send, to the receiving device, location information used to indicate a location of the to-be-monitored area.

Optionally, in this embodiment, the receiving device may include but is not limited to a terminal, such as a mobile phone, a tablet computer, or a notebook computer. Real-time and accurate monitoring is further ensured by sending the alarm information to a terminal easy to be carried by monitoring personnel.

In an optional solution, the apparatus further includes:

(1) a third obtaining unit, configured to: after it is determined that the difference between the temperatures corresponding to the adjacent areas is greater than the predetermined threshold and before the location information used to indicate the location of the to-be-monitored area is sent to the receiving device, obtain a current location and a current angle of the infrared detection apparatus; and
(2) a fourth obtaining unit, configured to obtain, according to the current location and the current angle of the infrared detection apparatus, the location information used to indicate the location of the to-be-monitored area.

Details are described with reference to the following example. FIG. 3(a) and FIG. 3(b) are schematic diagrams of obtaining a location of a fire disaster. A current location of the infrared detection apparatus is (X,Y, Z), where X, Y, and Z are respectively used to represent current longitude, latitude, and altitude. A current pitch angle (as shown in the figure) is $\alpha$, and a current rotation angle (relative to the longitude in the figure) is $\beta$. Further, a location (X',Y') of an actually detected fire disaster may be obtained through the following calculation:

$$S=Z*\tan\alpha \quad (1)$$

$$L=S*\sin\beta \quad (2)$$

$$P= S*\cos\beta \quad (3)$$

$$X'=X+L \quad (4)$$

$$Y'=Y+P \quad (5)$$

The foregoing calculation process is merely an example. A location of a fire disaster may further be obtained by using another manner, and this embodiment sets no limitation thereto.

In this embodiment provided in this embodiment, the location information used to indicate the location of the to-be-monitored area is accurately obtained according to the current location and the current angle of the infrared detection apparatus.

The sequence numbers of the foregoing embodiments of the present disclosure are only used for description, and do not indicate priority of the embodiments.

In the foregoing embodiments of the present disclosure, the embodiments emphasize different aspects, and for a part not described in detail in one embodiment, reference may be made to relevant description of another embodiment.

In the several embodiments provided in this application, it should be understood that the disclosed technical content may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between units or modules may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as an USB flash drive, a read-only memory (ROM, Read-Only Memory), a random access memory (RAM, Random Access Memory), a removable hard disk, a magnetic disk, or an optical disc.

The foregoing describes only preferred embodiments of the present disclosure. It should be noted that a person of ordinary skills in the art may still make several improvements and modifications without departing from the principles of the present disclosure, and such improvements and modifications shall also fall within the protection scope of the present disclosure.

**Claims**

1. A fire disaster monitoring method, comprising:

   obtaining an infrared image that is obtained through photoshooting a to-be-monitored area by an infrared detection apparatus located on an aerostat, wherein different colors displayed in the infrared image correspond to different temperatures;
   determining, according to the colors displayed in the infrared image, whether a difference between temperatures corresponding to adjacent areas in the infrared image is greater than a predetermined threshold; and
   if it is determined that the difference between the temperatures corresponding to the adjacent areas is greater than the predetermined threshold, sending fire disaster alarm information to a receiving device, wherein the fire disaster alarm information is used to indicate that a fire disaster occurs in the to-be-monitored area.

2. The method according to claim 1, before the obtaining an infrared image that is obtained through photoshooting a to-be-monitored area by an infrared detection apparatus located on an aerostat, further comprising:

   obtaining a monitoring parameter, wherein the monitoring parameter comprises at least a parameter used to indicate the to-be-monitored area; and
   driving the infrared detection apparatus to a location and an angle corresponding to the to-be-monitored area, wherein the location and the angle are used to enable a viewfinding picture of the infrared detection apparatus during the photoshooting to comprise the to-be-monitored area.

3. The method according to claim 2, wherein
   the monitoring parameter comprises at least a monitoring time period and a monitoring interval for the to-be-monitored area; and
   the obtaining an infrared image that is obtained through photoshooting a to-be-monitored area by an infrared detection apparatus located on an aerostat comprises: obtaining, in the monitoring time period, the infrared image that is obtained through photoshooting the to-be-monitored area by the infrared detection apparatus at the predetermined monitoring interval.

4. The method according to claim 1, when sending the fire disaster alarm information to the receiving device, further comprising:

   sending, to the receiving device, location information used to indicate a location of the to-be-monitored area.

5. The method according to claim 4, after it is determined that the difference between the temperatures corresponding to the adjacent areas is greater than the predetermined threshold and before the sending, to the receiving device, location information used to indicate a location of the to-be-monitored area, further comprising:

   obtaining a current location and a current angle of the infrared detection apparatus; and
   obtaining, according to the current location and the current angle of the infrared detection apparatus, the location information used to indicate the location of the to-be-monitored area.

6. The method according to any one of claims 1 to 5, wherein the infrared detection apparatus is an infrared detection camera.

7. A fire disaster monitoring apparatus, comprising:

   a first obtaining unit, configured to obtain an infrared image that is obtained through photoshooting a to-be-monitored area by an infrared detection apparatus located on an aerostat, wherein different colors displayed in the infrared image correspond to different temperatures;
   a determining unit, configured to determine, according to the colors displayed in the infrared image, whether a difference between temperatures corresponding to adjacent areas in the infrared image is greater than a predetermined threshold; and
   a first sending unit, configured to: if it is determined that the difference between the temperatures corresponding to the adjacent areas is greater than the predetermined threshold, send fire disaster alarm information to a receiving device, wherein the fire disaster alarm information is used to indicate that a fire disaster occurs in the to-be-monitored area.

8. The apparatus according to claim 7, further comprising:

   a second obtaining unit, configured to obtain a monitoring parameter before the infrared image that is obtained through photoshooting the to-be-monitored area by the infrared detection apparatus located on the aerostat is obtained, wherein the monitoring parameter comprises at least a parameter used to indicate the to-be-monitored area; and
   a driving unit, configured to drive the infrared detection apparatus to a location and an angle corresponding to the to-be-monitored area, wherein the location and the angle are used to enable a viewfinding picture of the infrared detection apparatus during the photoshooting to comprise the to-be-monitored area.

9. The apparatus according to claim 8, wherein the monitoring parameter comprises at least a monitoring time period and a monitoring interval for the to-be-monitored area; and the first obtaining unit comprises an obtaining module, configured to obtain, in the monitoring time period, the infrared image that is obtained through photoshooting the to-be-monitored area by the infrared detection apparatus at the predetermined monitoring interval.

10. The apparatus according to claim 7, wherein the first sending unit is configured to: when sending the fire disaster alarm information to the receiving device, send, to the receiving device, location information used to indicate a location of the to-be-monitored area.

11. The apparatus according to claim 10, further comprising:

    a third obtaining unit, configured to: after it is determined that the difference between the temperatures corresponding to the adjacent areas is greater than the predetermined threshold and before the location information used to indicate the location of the to-be-monitored area is sent to the receiving device, obtain a current location and a current angle of the infrared detection apparatus; and
    a fourth obtaining unit, configured to obtain, according to the current location and the current angle of the infrared detection apparatus, the location information used to indicate the location of the to-be-monitored area.

12. The apparatus according to any one of claims 7 to 11, wherein the infrared detection apparatus is an infrared detection camera.

Obtain an infrared image that is obtained through photoshooting a to-be-monitored area by an infrared detection apparatus disposed on an aerostat, where different colors displayed in the infrared image correspond to different temperatures

S102

Determine, according to the colors displayed in the infrared image, whether a difference between temperatures corresponding to adjacent areas in the infrared image is greater than a predetermined threshold

S104

If it is determined that the difference between the temperatures corresponding to the adjacent areas is greater than the predetermined threshold, send fire disaster alarm information to a receiving device, where the fire disaster alarm information is used to indicate that a fire disaster occurs in the to-be-monitored area

S106

FIG. 1

Area C

Area B

Area D

Area A

N

FIG. 2

302

α

Z

(X,Y)

S

FIG. 3 (a)

y

(X,Y)

x

β

S

P

(X',Y')

L

FIG. 3 (b)

First obtaining unit
402

Determining unit 404

First sending unit 406

Fire disaster monitoring
apparatus

FIG. 4

# INTERNATIONAL SEARCH REPORT

International application No.

**PCT/CN2016/100303**

### A. CLASSIFICATION OF SUBJECT MATTER

G08B 17/00 (2006.01) i

According to International Patent Classification (IPC) or to both national classification and IPC

### B. FIELDS SEARCHED

Minimum documentation searched (classification system followed by classification symbols)

G08B 17

Documentation searched other than minimum documentation to the extent that such documents are included in the fields searched

Electronic data base consulted during the international search (name of data base and, where practicable, search terms used)

CNABS; CNTXT; DWPI; SIPOABS; VEN: tree farm, forest region, pre-set, balloon, unmanned aerial vehicle, fire, forest, image, photo, picture, video, adjacent, neighbor, abutting, area, zone, region, district, vicinity, hover, aerostat, airborne, ball, float, temperature, threshold, predetermined, infra+

### C. DOCUMENTS CONSIDERED TO BE RELEVANT

| Category* | Citation of document, with indication, where appropriate, of the relevant passages | Relevant to claim No. |
|---|---|---|
| Y | KR 20120139179 A (LUNASTAR INVEST CO., LTD.), 27 December 2012 (27.12.2012), description, page 2, paragraph 1 to page 7, paragraph 4, and figures 1-6 | 1-12 |
| Y | CN 102819926 A (SOUTH CHINA AGRICULTURAL UNIVERSITY), 12 December 2012 (12.12.2012), description, paragraphs 0038-0075, and figures 1-10 | 1-12 |
| A | CA 2813831 A1 (BOEING CO), 24 January 2014 (24.01.2014), the whole document | 1-12 |
| A | EP 2860110 A1 (INVENIO CONSU1TING SRL), 15 April 2015 (15.04.2015), the whole document | 1-12 |
| Y | JIN, Fanshi, "Research on Fire Positioning Algorithm of Infrared Image Based on Geographic Information System", DISSERTATION FOR THE MASTER DEGREE IN ENGINEERING OF HARBIN INSTITUTE OF TECHNOLOGY, 12 November 2013 (12.11.2013), pages 8-24 | 1-12 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 December 2016 (22.12.2016) | **03 January 2017 (03.01.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **SUN, Pei'an** Telephone No.: (86-10) **62085800** |

Form PCT/ISA/210 (second sheet) (July 2009)

## INTERNATIONAL SEARCH REPORT
### Information on patent family members

International application No.

**PCT/CN2016/100303**

| Patent Documents referred in the Report | Publication Date | Patent Family | Publication Date |
|---|---|---|---|
| KR 20120139179 A | 27 December 2012 | KR 101256452 B1 | 19 April 2013 |
| CN 102819926 A | 12 December 2012 | CN 102819926 B | 29 April 2015 |
| CA 2813831 A1 | 24 January 2014 | CA 2813831 C | 22 December 2015 |
| | | US 2014027131 A1 | 30 January 2014 |
| | | EP 2689809 A1 | 29 January 2014 |
| EP 2860110 A1 | 15 April 2015 | None | |

Form PCT/ISA/210 (patent family annex) (July 2009)